(19) **Europäisches Patentamt · European Patent Office · Office européen des brevets**

(11) **EP 4 480 084 B1**

(12) **EUROPEAN PATENT SPECIFICATION**

(45) Date of publication and mention of the grant of the patent:
**04.02.2026  Bulletin 2026/06**

(21) Application number: **23721905.0**

(22) Date of filing: **24.04.2023**

(51) International Patent Classification (IPC):
**H02P 13/06** *(2006.01)*        **H01F 29/04** *(2006.01)*

(52) Cooperative Patent Classification (CPC):
**H01F 29/04; H02P 13/06**

(86) International application number:
**PCT/EP2023/060662**

(87) International publication number:
**WO 2023/208849 (02.11.2023 Gazette 2023/44)**

(54) **CONTROLLING THE TIMING OF A TRANSFORMER TAP CHANGE**

STEUERUNG DES ZEITPUNKTS EINER TRANSFORMATORSTUFENSCHALTUNG

CONTRÔLE DE LA TEMPORISATION D'UN CHANGEMENT DE PRISE DE TRANSFORMATEUR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **25.04.2022  EP 22382386**

(43) Date of publication of application:
**25.12.2024  Bulletin 2024/52**

(73) Proprietor: **Siemens Gamesa Renewable Energy Innovation & Technology S.L.**
**31621 Sarriguren (Navarra) (ES)**

(72) Inventors:
- **GUDE RODRIGUEZ, Isaac**
  **28850 Torrejón de Ardoz (ES)**
- **GARRO ARRAZOLA, Unai**
  **20690 Elgeta (ES)**
- **BARRENETXEA IÑARRA, Manex**
  **20500 Arrasate (ES)**
- **CANALES SEGADE, Jose María**
  **48200 Durango (ES)**
- **OLARIETA ETXEBARRIA, Igor**
  **48008 BILBAO (ES)**
- **SANTODOMINGO LLAMAS, Fernando**
  **35009 Las Palmas de Gran Canaria (ES)**

(74) Representative: **SGRE-Association**
**Siemens Energy Global GmbH & Co. KG**
**SE I IM P Intellectual Property**
**Siemenspromenade 9**
**91058 Erlangen (DE)**

(56) References cited:
**EP-A1- 3 742 251     CN-A- 112 735 790**
**US-A- 3 551 789**

- **JAWAD FAIZ ET AL: "New Controller for an Electronic Tap Changer-Part I: Design Procedure and Simulation Results", IEEE TRANSACTIONS ON POWER DELIVERY, IEEE SERVICE CENTER, NEW YORK, NY, US, vol. 22, no. 1, 1 January 2007 (2007-01-01), pages 223 - 229, XP011152567, ISSN: 0885-8977, DOI: 10.1109/ TPWRD.2006.881424**
- **RODOLFO ECHAVARRIA ET AL: "Analysis, Design, and Implementation of a Fast On-Load Tap Changing Regulator", IEEE TRANSACTIONS ON POWER ELECTRONICS, INSTITUTE OF ELECTRICAL AND ELECTRONICS ENGINEERS, USA, vol. 22, no. 2, 1 March 2007 (2007-03-01), pages 527 - 534, XP011172360, ISSN: 0885-8993, DOI: 10.1109/TPEL.2006.889938**

**Description**

FIELD OF THE INVENTION

The present invention relates to a method of generating a timing control signal for controlling the timing of a change of a transformer tap of a transformer, in particular of a wind turbine transformer. The invention further relates to a respective control system that controls an on-load tap changer of such transformer and to computer program for generating such timing control signal.

BACKGROUND

A wind turbine is generally connected to a power grid, which may be a local wind farm grid or a utility grid, via a respective wind turbine transformer. The power generation system of the wind turbine may comprise for a variable speed wind turbine a generator and a power converter, which may be arranged in a full converter topology or in a DFIG topology. The power converter may experience voltage variations on the power grid which are transmitted through the transformer. Undesirable over-voltage or under-voltage conditions may thus be experienced by the wind turbine electrical power system.

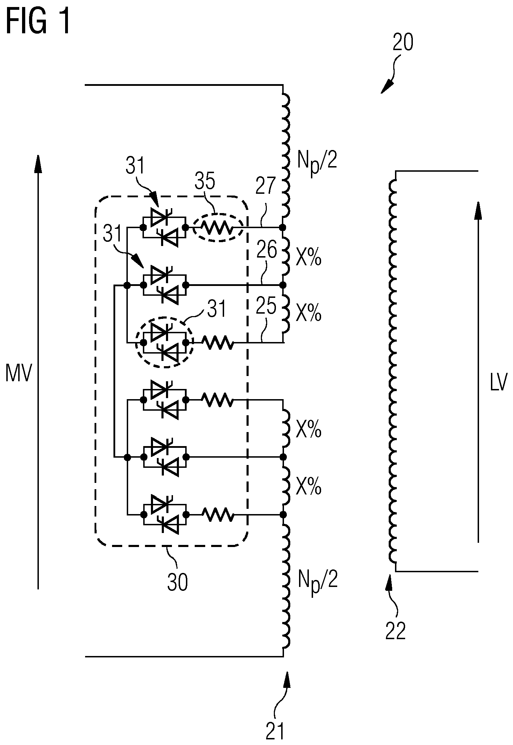

To solve this problem, document WO 2020/239425 A1 describes the use of an electronic on-load tap changer, for example on the primary winding of the wind turbine transformer. By changing the tap setting, voltage variations on the power grid may be compensated. An exemplary configuration is shown in Fig. 1, wherein the wind turbine transformer 20 may comprise a primary winding 21 provided with tap changer 30 and a secondary winding 22. Switching elements 31, e.g. switching valves, may be connected to each tap and may be controlled for switching for example between taps 25, 26 and 27. In view of the high short circuit currents that may occur when connecting two taps via switching elements 31, changeover impedances 35, such as inductors and/or resistors, may be provided to lower the short circuit current peak value during tap change. However, such solution is not optimal, for example due to the volume and cost of the required impedances. Another possibility is the over-sizing of the thyristors, the installation of snubber circuits or the like. However, they suffer from similar drawbacks and increase the costs. The short circuit current peak further affects the lifetime of the transformer and of the thyristors due to mechanical and thermal effects of such currents.

The document "Solid-state on-load transformer tap changer", IEE Proc.: Electric Power Applications, Vol. 143, No. 6, Nov. 1996, describes a switching logic for a single-phase transformer tap changer using thyristor switching. It is however not described how the switching times for the thyristor switches can be derived.

The document US 10,727,755 B2 describes a forced commutation switching sequence for switching between transformer taps. The document does however not mention how the timing of the switching can be derived.

The document US 3,551,789 A describes a static tap changer apparatus in which during a tap change, the closing of a switch associated with the new tap is delayed so that it is avoided that two tap connections are conductive at the same time, which results in a discontinuity of the current at the load side.

The document "New Controller for an Electronic Tap Changer ..." Faiz J. et al., IEEE Transactions on Power Delivery, Vol. 22, No. 1, Jan. 2007, describes a controller design for an electronic tap changer, wherein to find a respective controller design, assumptions are made including only resistive impedances in the system and instant knowledge of amplitude and phase angle of the waveforms of all quantities.

The document "Analysis, Design, and Implementation of a Fast On-Load Tap Changing Regulator", Echavarria et al., IEEE Transactions on Power Electronics, Vol. 22, No. 2, March 2007, describes a fast on-load tap changing regulator that employs changeover inductances for limiting short-circuit currents during a tap change.

The document CN 112735790 A describes a control strategy for a power electronic on-load tap-changing distribution transformer, wherein a voltage measuring device directly measures the voltage value of the three-phase low-voltage winding, and voltage regulation trigger signals are provided for turning on at the zero crossing of the voltage.

It is desirable to accurately switch the switching elements of a tap changer in such a way that short circuit currents during a tap change can be kept low while not requiring large changeover impedances.

SUMMARY

Accordingly, there is a need to mitigate at least some of the drawbacks mentioned above and to improve the timing of the switching of such on-load tap changer, for example for a wind turbine transformer.

This need is met by the features of the independent claims. The dependent claims describe embodiments and/or examples of the invention.

According to a first aspect, a method of generating a timing control signal for controlling the timing of a change of a transformer tap of a transformer is provided. The transformer comprises an on-load tap changer comprising plural respective transformer taps. The method comprises: monitoring a voltage on a primary side and/or on a secondary side of the transformer to obtain a monitoring signal; deriving, from the monitoring signal, an intermediate signal that is indicative of at least one zero crossing of a tap voltage at the transformer tap, wherein deriving the intermediate signal comprises estimating, based on the monitoring signal, a phase of the monitored voltage to obtain a phase signal and applying to the phase signal a phase correction for a phase shift between the monitoring signal or a signal derived therefrom and the tap voltage at the transformer tap; and deriving the timing control signal from the intermediate signal.

From the monitoring signal, it may be determined when the monitored voltage has zero crossings - these may however be phase shifted with respect to the zero crossings of the tap voltage at the transformer tap, for example due to phase shifts between the position at which the voltage is monitored and the position of the transformer tap, phase shifts introduced by the transformer configuration (in particular the type and configuration of winding connections, e.g. delta-delta, delta-wye, etc., and a respectively introduced phase shift), and/or by a phase shift, e.g. a delay, introduced during the acquisition and processing of the monitoring signal. By applying the phase correction, the precision of the estimation of the zero crossing of the actual tap voltage may be improved. By deriving the timing control signal from such improved estimation, the timing control signal may more accurately reflect the desired timing of the switching of the transformer tap, e.g. the timing of the closing of a switching element coupled to a transformer tap to which a tap change is to be made. Consequently, short circuit currents that may occur during a tap change may be limited more efficiently.

The phase correction may for example be applied by adding a (positive or negative) phase value to the phase signal. Changes to the phase of the monitored voltage and/or delays may thus be considered in a simple and efficient way.

The timing control signal may for example indicate the instant at which the zero crossing of the tap voltage occurs, or it may indicate an instant at which the switching of a switching element coupled to a transformer tap is to occur. It may for example define respective switching points, e.g. in the form of peaks or spikes in the signal. The timing control signal may for example be derived so as to comprise least one switching point that is located within a predetermined distance to the at least one zero crossing of the tap voltage, in particular prior to the at least one zero crossing of the tap voltage. Such distance may be a predetermined amount of time corresponding to a predetermined phase offset, e.g. less than 4ms or 3ms prior to the zero crossing of the tap voltage.

The phase correction may be applied concurrently with a respective phase offset. The intermediate signal may on one hand be indicative of the zero crossings of the tap voltage and on the other hand already includes a phase offset that shifts a switching point for a tap change to a desired timing.

A signal derived from the monitoring signal may be any signal that is indicative of a zero crossing of the tap voltage without phase correction. A derived signal may for example be a zero crossing signal indicating zero crossings of the monitored voltage, the phase signal, or another signal derived from the monitoring signal prior to phase correction.

A phase shift may correspond to a delay, since a certain phase difference at a certain frequency (e.g. the frequency of the monitored voltage or the tap voltage, which are generally equal) corresponds to a certain amount of time. A delay introduced by processing the monitoring signal can thus be compensated by a respective phase correction. The voltage that is being monitored may be termed 'monitored voltage' herein. The tap voltage may be the voltage at the connected (old) transformer tap. The tap voltage may in particular be the tap winding voltage, e.g. the winding voltage at the tap position of the respective winding. A switching point may define a point in time at which the switching element connected to a new transformer tap, to which the tap change is to occur, is to be switched (closed). 'Old tap' may refer to the tap that is to be disconnected during the tap change, wherein 'new tap' may refer to the tap that is to be connected into the circuit during the tap change. In particular, the current through the respective transformer winding may change from flowing through the old tap to flowing through the new tap by the tap change.

In an example, the transformer taps may be provided at least on the primary side of the transformer, and the voltage may be monitored on the secondary side of the transformer, wherein applying the phase correction may comprise estimating a transformer phase shift between a voltage on the primary side (primary voltage) of the transformer and a voltage on the secondary side (secondary voltage) of the transformer and providing a phase correction for the transformer phase shift. Accordingly, a precise timing of the tap change may be achieved even if the voltage is monitored on a side of the transformer that is different from the side on which the transformer taps are provided. This may be particularly advantageous for a wind turbine transformer, wherein monitoring of the voltage may occur on the transformer secondary side that may be coupled to the wind turbine power generation system and may be at a lower voltage level (e.g. at low voltage (LV)), whereas the tap changer may be provided on the primary side that may be coupled to a power grid and that may be at a higher voltage level (e.g. medium voltage (MV) or high voltage (HV)). A respective transformer phase shift may have different causes, comprising a phase angle shift due to the transformer type (configuration of transformer windings connection, e.g. delta-delta or delta-wye, i.e. the vector group of the transformer) and a phase angle shift due to a leakage inductance of the transformer, as explained in more detail further below.

In an example, estimating the transformer phase shift may comprise obtaining information indicating a phase difference between the monitored voltage and a current on the secondary side of the transformer and deriving the transformer phase shift from a model of the transformer that uses the monitored voltage and the obtained information as input. A phase shift due to a leakage inductance of the transformer may thereby be estimated. Estimating the transformer phase shift may additionally or alternatively comprise determining a phase shift due to the winding connection type, in particular a phase shift due to the vector group of the transformer. In some examples, such phase shift due to the vector group may be considered in the model of the transformer together with the phase shift due to the leakage inductance. A precise estimation of the transformer phase shift may thus be obtained in a simple way.

The obtained information may for example comprise information on a reactive and active current supplied to the transformer on the secondary side, it may for example comprise an active power setpoint and a reactive power setpoint for the operation of a power generation system (e.g. of a wind turbine) that supplies electrical power to the secondary side of the transformer. Such active and reactive power setpoints may for example be known to a controller (e.g. converter controller) that controls a power converter that may form part of the power generation system. From such setpoints, a phase relationship between the monitored voltage and a corresponding current supplied to the secondary side of the transformer may be derived (the phase shift between voltage and current determine the power factor which is derivable from the ratio of active power to apparent power).

The model of the transformer may be an equivalent circuit of the transformer that considers at least a resistance and a reactance for the primary side of the transformer and a resistance and a reactance for the secondary side of the transformer. The phase difference between a voltage on the secondary side and a voltage on the primary side (i.e. the transformer phase shift) may be estimated from such model when knowing the current through the transformer. For example, a current through a series branch modeling the primary and the secondary windings of the transformer may be used to estimate the (complex) voltage drop in a vector representation, and the voltage on the primary side of the transformer may be obtained from the voltage on the secondary side of the transformer (e.g. the monitored voltage) and the (complex) voltage drop. Knowing the voltage vectors on the primary and the secondary sides, the phase difference (i.e. the phase angle) between these voltages may be determined, which may correspond to the transformer phase shift. The transformer phase shift may further comprise a phase shift caused by the vector group (winding connections types) of the transformer. This may be considered separately from the phase shift due to the leakage inductance, or may be considered together therewith, e.g. in the transformer model.

The transformer phase shift may be applied as a dynamic phase correction, as it may depend on the operating point of the transformer, in particular on the phase and magnitude of current and voltage provided at the secondary side of the transformer. It may for example depend on the above mentioned active and reactive power setpoints at which the power generation system provides electrical power to the secondary side of the transformer.

Applying the phase correction may comprise applying a fixed phase correction in which the phase signal may be corrected by a fixed value and/or applying a dynamic phase correction in which the phase signal may be corrected by a variable value that is allowed to change during operation. A dynamic phase correction may in particular be allowed to change during the performing of the method, e.g. during operation of the transformer. As mentioned above, some phase shifts and/or delays may dynamically depend on the current operating conditions of the transformer and/or of a system of which the transformer forms part.

Applying the phase correction may comprise at least partially compensating a phase shift or delay introduced into the tap voltage compared to a phase of the monitored voltage (e.g. a phase shift caused by the propagation of the voltage through the electrical system) and/or at least partially compensating a phase shift or delay introduced during acquisition and/or processing of the monitoring signal.

For example, applying the phase correction may comprise one or a combination of: applying a correction for a delay introduced by acquiring the monitoring signal by digital data acquisition (e.g. by anti-alias filtering performed by a data acquisition board sampling measured voltage values of the monitored voltage); applying a correction for a delay introduced by code execution by a processing unit deriving the timing control signal (e.g. cycle processing time of controller, e.g CCU); applying a correction for a delay introduced by filtering the monitored voltage or the monitoring signal, in particular by a filter configured to remove signal distortions (for example harmonic distortions); applying a correction for a phase shift introduced by an electric connection between a position at which the voltage is monitored and a location of the transformer (e.g. by cabling between the monitoring position and the transformer); applying a correction for a phase shift introduced by an electric circuit in an electrical path between the position at which the voltage is monitored and the location of the transformer (for example by a filtering unit, e.g. harmonic filter, connected between a power converter, at which the voltage is monitored, and the transformer); applying a correction for a phase shift introduced by a configuration of connections of primary and secondary windings of the transformer, in particular for the vector group of the transformer (e.g. for the primary-secondary connection, such as delta-wye, delta-delta, wye-wye, etc.); or applying a dynamic phase correction for a phase shift introduced by the transformer (e.g. a correction for a transformer phase shift due to leakage inductance). The first mentioned corrections may be fixed corrections while the last correction may be a dynamic correction.

A time delay introduced into the monitoring signal may for example be considered by multiplying the delay with the detected frequency of the monitored voltage and adding the resulting phase correction to the phase signal.

In an example, the transformer may be a three phase transformer comprising transformer windings for three electrical phases. The on-load tap changer may comprise transformer taps for each of the three electrical phases of the transformer, e.g. at least on the primary side. The phase signal may be estimated individually for each of the three electrical phases and/or the phase correction may be applied individually for each of the three electrical phases and/or the timing control signal may be derived individually for each of the three electrical phases. A precise timing for the tap change may thus be obtained for each of the three phases. A tap change may in particular comprise the changing of a transformer tap for each of the three transformer windings corresponding to the three electrical phases. However, as the voltages of the three electrical phases are phase shifted with respect to each other, the timing control signal may be different for each electrical phase. The monitoring signal may comprise a signal for each of the three electrical phases, i.e. it may be a three phase signal, which may form the basis for deriving an individual timing control signal for each phase.

In an example, estimating the phase of the monitored voltage may comprise using a zero crossing detector to detect at least one zero crossing of the monitoring signal. A zero crossing signal may thereby be obtained. For a three phase system, a zero crossing detector may be provided for each of the electrical phases of the transformer, and the at least one zero crossing of the monitoring signal may be detected individually for each phase (the zero crossing signal may thus be a three phase signal).

Detecting at least one zero crossing of the monitoring signal by the zero crossing detector may comprise using at least a first voltage threshold above a zero voltage value and a second voltage threshold below a zero voltage value and determining the presence of a zero crossing if the monitoring signal has a value between the first voltage threshold and the second voltage threshold. In particular for a sampled digital signal, the voltage values may never be exactly zero, so that using such two thresholds arranged in proximity to the zero value may allow a fast and efficient detection of a zero crossing. The first and second voltage thresholds may for example be selected in dependence on a sampling rate at which the monitored voltage is sampled to obtain the monitoring signal (i.e. the sampling rate of the monitoring signal) and/or a frequency of the monitored voltage (e.g. 50Hz or 60Hz). For example, compared to the voltage range of the monitored voltage, the first and second voltage thresholds may be located close to the zero value of the monitored voltage. The first voltage threshold may for example lie at most 20%, 10% or 5% of the positive amplitude above zero volt and the second voltage threshold may for example lie at most 20%, 10%, or 5% of the negative amplitude below zero volt.

Monitoring the voltage may comprise obtaining measurements of the monitored voltage. For example, measurements made by a converter controller of a power generation system , e.g. of a wind turbine, that provides electrical power to the transformer may be received. The obtained measurements may be filtered in the analog and/or digital domain, e.g. for removing harmonic distortions, for example by applying a low pass filter.

Estimating the phase of the monitored voltage may comprise using a phase locked loop (PLL) to detect a frequency of the monitored voltage, in particular by providing the monitoring signal as an input to such PLL. The frequency of the monitored voltage and thus of the tap voltage may thereby be determined precisely. The frequency may for example be derived as an angular frequency. For a three phase transformer, the frequency may be derived from the three phase monitoring signal corresponding to the three electrical phases of the monitored voltage. For example, a three phase PLL may be used to derive the frequency, in particular from a positive sequence component of the three phase monitoring signal (e.g., a positive sequence PLL may be employed).

In an example, the phase signal may be generated by an integrator that uses the detected zero crossing of the monitoring signal (e.g. the zero crossing signal) and the detected frequency of the monitored voltage as inputs and that gives out the phase signal.

Obtaining the phase signal may for example comprise integrating the detected frequency, wherein the integration may be started at the detected zero crossing of the monitoring signal. The integration may be reset at each or at each second detected zero crossing of the monitoring signal. For example, the phase signal may be reset alternatingly to a value of zero and a value of $\pi$ at each detected zero crossing, or may be reset to a value of zero at each second detected zero crossing. By such method, the phase signal may increase linearly from a phase value of zero to a phase value of $2\pi$, upon which the phase signal may be reset again to a value of zero. The value range of the phase signal may be restricted to between 0 and $2\pi$. Integration may thus correspond to a counter that reaches a value of $2\pi$ after each period of the detected frequency.

In a three phase system, three individual phase signals may be derived from three individual zero crossing signals, and from a common estimation of the frequency of the monitoring signal using a three phase PLL that gives out a single frequency value.

By applying the phase correction to the phase signal, a corrected phase signal may be obtained, which is indicative of the at least one zero crossing of the tap voltage. In the corrected phase signal, the zero crossings of the tap voltage may for example lie at phase values of $0/2\pi$ and $\pi$. If a predetermined (and thus known) phase offset is further applied (e.g. to shift the switching points to a time prior to the zero crossing), the zero crossings may lie at respectively shifted phase values. The intermediate signal may correspond to the corrected phase signal or the offset corrected phase signal. The units of the phase signal may be different from radians; the phase signal may be provided in degrees or any other desirable unit.

In an example, deriving the timing control signal from the intermediate signal may comprise: detecting, in the intermediate signal, the occurrence of at least one predetermined phase value, and generating the timing control signal based on the detection of the at least one predetermined phase value by generating a signal change in the timing control signal when the predetermined phase value is detected.

The predetermined phase value may directly correspond to a zero crossing of the tap voltage, or may be shifted by a phase offset from the phase value of the zero crossing, for example if such phase offset is applied to the corrected phase signal prior to the derivation, or if such offset is directly applied to the predetermined phase value used in the detection, in order to obtain a desired timing of the switching points.

In the timing control signal, a signal change, i.e. a change in the signal value, may correspond to a pulse or a spike at the point in time at which the predetermined phase value is detected. The signal change may indicate the zero crossing of the tap voltage or a switching point. The switching point may define the point in time at which the switching element of the tap changer is to be switched for effecting the tap change, e.g. by firing a thyristor of such switching element. The switching point may thus be a firing pulse for a semiconductor switch of such switching element.

The detection of the predetermined phase value may be performed by a detector (a so called angle zero crossing detector), which may detect zero crossings of the tap voltage by detecting the at least one predetermined phase value (in particular a phase angle) in the intermediate signal. The at least one predetermined phase value may for example correspond to 0, $\pi$, and/or $2\pi$ (if no phase offset is applied).

Detecting the occurrence of the predetermine phase value may comprise providing a first phase threshold above the respective predetermined phase value, providing a second phase threshold below the respective predetermined phase value, and detecting the occurrence of the predetermined phase value if the intermediate signal has a value that lies between the first and second phase thresholds. Again, the phase thresholds may be selected in dependence on the sampling rate and/or frequency of the intermediate signal, in a similar manner as the voltage thresholds mentioned above. The first and second phase thresholds may for example lie less than 10%, 5%, or 2% of the phase signal range above or below the predetermined phase value, respectively.

In some examples, the predetermined phase value may be $\pi$, and the first and second phase thresholds may lie above and below the value of $\pi$, respectively. Another zero crossing of the tap voltage may occur at a phase value of 0 or $2\pi$ (if no phase offset is applied). As mentioned above, the phase signal may be reset after each period of $2\pi$, e.g. after each second detected zero crossing of the monitored voltage. Accordingly, there may be a discontinuity present at the position at which the phase signal transitions from the value of $2\pi$ to the value of 0.

To determine a switching point for such zero crossing, after detecting the occurrence of the predetermined phase value of $\pi$, the values of the intermediate signal may be shifted by adding a phase value of $\pi$ to the phase signal, and keeping the signal values of the intermediate signal in the range between 0 and $2\pi$, e.g. by wrapping back phase values exceeding $2\pi$. For example, the value may be brought back into the range by subtracting $2\pi$ if a phase value exceeds $2\pi$, e.g. $1.5\pi$ may be shifted to $2.5\pi$, which is wrapped back to $0.5\pi$ and thus back into the range. Such shifting of the phase signal may result in that the next zero crossing of the tap voltage again corresponds to a phase value of $\pi$ of the intermediate signal. Detection of the predetermined phase value may thus be facilitated, since the same predetermined phase value (e.g. $\pi$) may be detected repeatedly by using the same phase thresholds.

In another example, plural different predetermined phase values may be detected, such as a phase value of $0/2\pi$, wherein a third phase threshold may be positioned below the value of $2\pi$ and a fourth phase threshold may be positioned above the value of zero. The occurrence of such predetermined phase value may then be detected if the phase signal has a value higher than the third phase threshold or lower than the fourth phase threshold.

As already mentioned, the timing control signal may be derived so as to comprise at least one switching point, e.g. a signal change such as a pulse, that is time shifted from the at least one zero crossing of the tap voltage (in particular the tap winding voltage, e.g. a winding voltage of the respective transformer winding at the position of the tap) by a predetermined amount of time, in particular to a time prior to the zero crossing. Thereby, the timing of the switching of the switching elements of the tap changer may be set to a desired point in time prior to the zero crossing of the tap voltage. The time shift may correspond to less than 40%, 30% or 20% of the period of the tap voltage. For example, it may correspond to a shift of less than 3 ms to a position prior to the zero crossing of the tap voltage for a 50 Hz or a 60 Hz frequency of the tap voltage. The time shift may for example occur to a position of about 2 ms prior to the zero crossing of the tap voltage. By such time shift, it may be ensured that a magnitude and duration of a short circuit current through the transformer tap that may occur during the tap change may be kept low. It is noted that for a 50 Hz tap voltage, the period is 20 ms, so that 2 ms corresponds to 10% of the period.

The method may for example comprise applying a predetermined phase offset to the phase signal prior to the deriving of the timing control signal, e.g. by adding the phase offset to the phase signal (for a three phase transformer, to the phase signal of each electrical phase). This may be performed before, during, or after applying the phase correction, the phase offset may for example be applied as part of the phase correction or may be applied to the corrected phase signal. Such phase offset may correspond to the desired time shift by which the switching point is to be shifted from the tap voltage zero crossing. The intermediate signal may correspond to such offset corrected phase signal, which may still be indicative of the zero crossings of the tap voltage; these zero crossings do however no longer correspond to phase values of 0/2pi or pi, but to respectively offset phase values. Such phase offset may have the advantage that the predetermined phase value and thus the same phase thresholds may be employed for detecting the times at which switching points are to be generated in the timing control signal. By adding such phase offset, the angle zero crossing detector may for example detect the predetermined phase value earlier than the actual occurrence of the tap voltage zero crossing, thereby shifting the switching points in the timing control signal to earlier times.

Additionally or alternatively, such time shifting may be achieved by shifting the predetermined phase value that is detected in the intermediate signal, for example by shifting the first and second phase thresholds. By shifting the predetermined phase value to a lower value, the occurrence of such shifted predetermined phase value will be detected earlier, and by shifting the predetermined phase value to a higher value, it will be detected later. The position of the switching points in the timing control signal derived from the detection of the one or more predetermined phase values may thus be advanced or delayed as desired.

The transformer may be configured to provide a transformation between a second voltage on a secondary side of the transformer and a first voltage on a primary side of the transformer. The first voltage may be higher than the second voltage. The on-load tap changer may be provided at least on one of the primary side and the secondary side of the transformer, it is preferably provided at least on the primary side. The on-load tap changer may be an electronic on-load tap changer. It may comprise plural switching elements each coupled to a transformer tap of a winding of the transformer, wherein each switching element may comprise at least one, preferably a pair of semiconductor switches, such as a pair of thyristors.

The transformer may be a wind turbine transformer. The secondary side of the transformer may be coupled to a power generation system of a wind turbine. The primary side of the transformer may be coupled to a power grid. The transformer may be configured to provide transformation of electrical power generated by the power generation system. The transformed electrical power may be fed into the power grid. The transformer may for example provide low voltage (LV) to medium voltage (MV) or high voltage (HV) transformation; however, the solution disclosed herein is not limited to such type of transformer.

According to a further aspect, a method of controlling an on-load tap changer of a transformer to perform a tap change from a first transformer tap to a second transformer tap is provided. The method may comprise: determining a timing control signal according to any of the methods disclosed herein; detecting a triggering event to trigger the tap change; upon detecting the triggering event, deriving from the timing control signal a drive signal for switching (e.g. closing) a switching element coupled to the second transformer tap; and applying the drive signal to the switching element of the second transformer tap to perform the tap change.

The drive signal may in particular cause the switching of the switching element at the point in time indicated by a switching point comprised in the timing control signal. Accordingly, the switching may occur very precisely at a predetermined point in time prior to the zero crossing of the tap voltage. Duration and magnitude of short circuit currents during the tap change may thus be kept low. The switching element may be a switching valve; it may for example comprise two semiconductor switches, e.g. two thyristors connected anti-parallel. The drive signal may close the switching element connected to second tap to connected second tap into the circuit on the respective transformer side, e.g. to connect the second tap of the transformer winding to the respective transformer terminal. The timing control signal may for example be used to trigger a driver, e.g. a thyristor driver, to generate the drive signal to close the respective switch of the switching element.

The method may further comprise ceasing a supply of a drive signal to a switching element connected to the first transformer tap, e.g. to open such switching element. This may for example occur after expiry of an overlap period during which both switching elements are closed. It may occur early enough prior to the zero crossing of the tap voltage to allow a switch (e.g. thyristor) of the switching element of the first tap to recover, i.e. to reach a stable blocking state. A tap change without interruption of the load current may thereby be achieved.

During such overlap period, a winding section of the transformer winding between the first and second transformer taps may be short-circuited. A current induced in the winding section may result in a respective short circuit current. Such current is phase shifted with respect to tap voltage and may start to rise until the zero crossing of tap voltage occurs and may fall again thereafter. Switching shortly prior to the zero voltage crossing may thus limit the short circuit current.

According to another aspect of the present invention, a control system configured to control the changing of a transformer tap of a transformer is provided. The transformer comprises an on-load tap changer comprising plural respective transformer taps. The control system may be configured to perform any of the methods described herein; it may in particular be configured to determine a timing control signal for controlling the timing of the change of the transformer tap in accordance with the aspects and examples of the above described method. The control system may include a processing unit and a memory, wherein the memory may store control instructions which when executed by the processing unit cause the control system to perform any of the disclosed methods.

According to another aspect, a wind turbine transformer comprising the on-load tap changer and further comprising such control system may be provided. According to a further aspect, a wind turbine may be provided that comprises a power generation system and such wind turbine transformer coupled to the power generation system. The transformer may receive electrical power from the power generation system and may provide transformed electrical power to a power grid. The control system may be coupled to a converter controller of a power converter of the power generation system to monitor the voltage, or such converter controller may form part of the control system. A converter controller may for example be a converter control unit (CCU) of the power converter.

According to another aspect of the invention, a computer program for determining a timing control signal for controlling the timing of a change of a transformer tap of a transformer is provided. The computer program comprises control instructions which, when executed by a processing unit of a control system that controls an on-load tap changer of the transformer, cause the processing unit to perform any of the methods described herein. The computer program, in particular its control instructions, may be provided on a volatile or non-volatile storage medium or data carrier.

It should be clear that the method may be carried out with the control system in any of the configurations described herein. Further, the control system may be configured to perform any of the methods disclosed herein.

It is to be understood that the features mentioned above and those yet to be explained below can be used not only in the respective combinations indicated, but also in other combinations or in isolation, without leaving the scope of the present invention. In particular, the features of the different examples and embodiments of the invention can be combined with each other unless noted to the contrary.

BRIEF DESCRIPTION OF THE DRAWINGS

The foregoing and other features and advantages of the invention will become further apparent from the following detailed description read in conjunction with the accompanying drawings. In the drawings, like reference numerals refer to like elements.

Fig. 1 is a schematic drawing showing a tap changer that employs changeover impedances for limiting short circuit currents during the tap change.

Fig. 2 is a schematic drawing showing a wind turbine comprising a power generation system, a transformer with an on-load tap changer and a control system according to an example of the invention.

Fig. 3 is a schematic drawing that schematically illustrates currents that may occur during a tap change in the system of figure 2.

Fig. 4 is a schematic drawing that shows a section of figure 3 in more detail.

Fig. 5 is a schematic drawing showing a control system according to an example of the invention.

Fig. 6 is a diagram illustrating the voltage waveform of a tap voltage and a short circuit current occurring during a tap change as well as the switching points at which semiconductor switches of the tap changer may be switched.

Fig. 7 is a diagram illustrating the voltage waveform and further short circuit currents that may occur during a tap change when switching at different times.

Fig. 8 is a schematic drawing showing the generation of a timing control signal in a control system according to an example of the invention.

Figs. 9-12 are schematic diagrams illustrating different signals during the generation of a timing control signal according to an example of the invention.

Fig. 13 is a schematic drawing showing a phase correction according to an example of the invention.

Fig. 14 is a schematic drawing showing a transformer model for deriving a variable phase correction according to an example of the invention.

Fig. 15 is a schematic diagram illustrating voltage and current vectors of the transformer model of figure 14.

Fig. 16 is a flow diagram illustrating a method of generating a timing control signal according to an example of the invention.

DETAILED DESCRIPTION

In the following, embodiments and/or examples of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

Hereinafter, an exemplary implementation of the disclosed solutions in a wind turbine electrical power system is described for the purpose of illustration; it should however be clear that the disclosed solutions may also be implemented in other environments (e.g. distribution grids, substation transformers, photovoltaic applications, railway applications and the like), in which a fast and efficient tap changing is beneficial. Furthermore, the examples are provided for switches in form of semiconductor switches. The teachings disclosed herein may however also be applied to other types of switches, such as electro-mechanical switches.

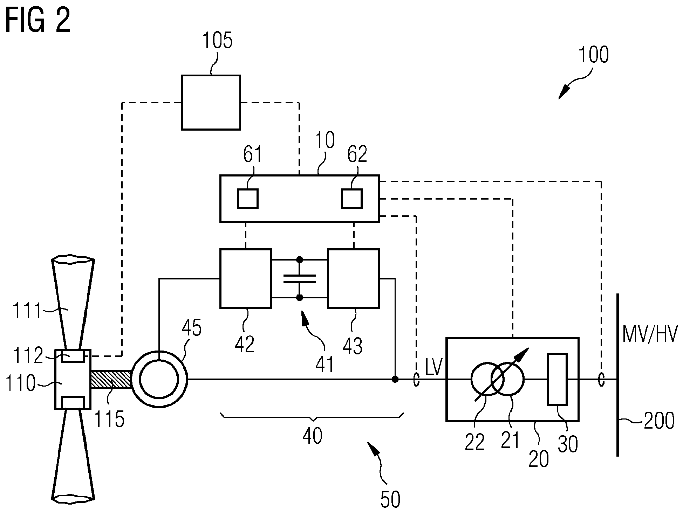

Fig. 2 schematically illustrates a wind turbine 100 comprising a wind turbine rotor with a hub 110 and rotor blades 111. A power generation system 50 of the wind turbine may comprise a power converter 40 and a generator 45 and may be coupled to the wind turbine transformer 20. In the present example, generator 45 is a doubly-fed induction generator (DFIG) the stator of which is coupled via wind turbine transformer 20 to power grid 200, whereas the rotor is connected to the power converter 40. In other examples, a full converter solution may be provided in which a generator, e.g. a permanent magnet synchronous generator, may be connected to power grid 200 via a power converter through which essentially all of the generated power flows. The generator 45 may be coupled to the rotor hub 110 using shaft 115, and possibly an intervening gearbox (not shown). The wind turbine rotor may be provided with a blade pitch drive 112 controlled by wind turbine controller 105.

A control system 10 is furthermore provided which may comprise a converter control unit (CCU) that controls the power converter 40. In other examples, the CCU may be provided separately. Wind turbine transformer 20 may comprise primary winding 21, which is a higher voltage winding connected to power grid 200, which may be medium voltage (MV) or high voltage (HV) grid. Transformer 20 may further comprise a secondary winding 22, which may be a lower voltage winding receiving low voltage (LV) or medium voltage (MV) electrical power from generator 45 and/or power converter 40. LV typically refers to a voltage range of up to 1.000 V. Transformer 20 may further comprise the electronic on-load tap changer 30 that in the example of Fig. 2 is provided on the primary winding 21, yet may in other implementations also be provided on the secondary winding 22. Transformer 20 may comprise plural secondary windings (e.g. one connected to generator 45, the other to converter 40). Power system 50 may be a three-phase power system comprising conductors for each phase, and power grid 200 may operate at a voltage frequency of 50 Hz or 60 Hz.

The control system 10 may measure a transformer voltage on the LV side and/or the MV/HV side of the transformer 20 to estimate the occurrence of a voltage zero crossing at a tap of the tap changer and may in accordance therewith control the operation of the tap changer 30, as explained in more detail further below.

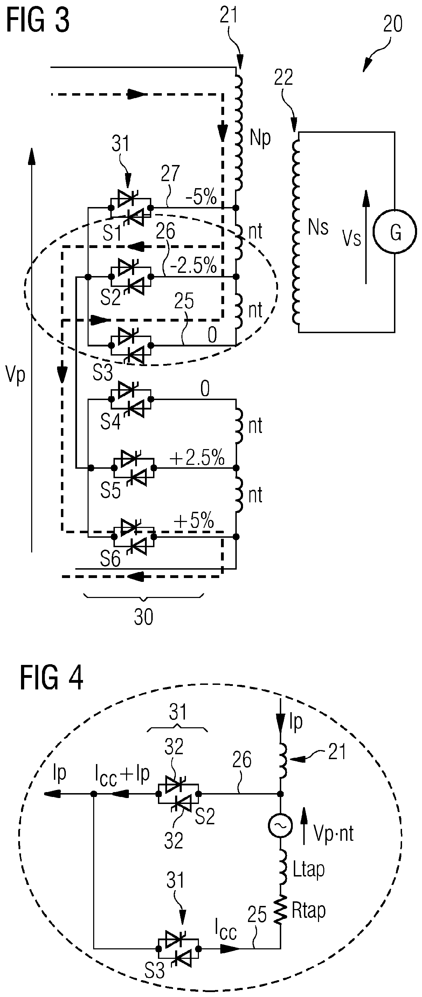

Fig. 3 illustrates the transformer winding 21 comprising exemplary taps 25, 26, 27. Tap changer 30 may comprise a switching element 31 (abbreviated herein as switch) connected to each tap. Each switching element may comprise or consist of two semiconductor switches 32 (Fig. 4). Semiconductor switches 32 are preferably thyristors (electrically triggered or light-triggered) that are connected anti-parallel. With each tap, a certain fraction nt of turns can be connected into the current path or taken out of the current path through the transformer winding 21. As generally known, the transformation ratio of transformer 20 depends on the turns ratio ($N_P/N_S$) of the primary and secondary windings 21, 22, so that by changing the taps (and thus the number of turns in winding 21), the transformation ratio ($V_P/V_S$) and thus the voltage Vs on the secondary side can be adjusted. Fig. 3 illustrates exemplary percentages of the voltage increase or voltage decrease when connecting the respective taps. The thick dashed line indicates the primary current $I_P$ occurring during a tap change between taps 25 and 26, which is illustrated in more detail in Fig. 4.

Fig. 4, which shows an enlarged section of Fig. 3, illustrates the situation in which the switching elements 31 connected to taps 25 and 26 (i.e. switches S3 and S2) are closed during a tap changing between these taps (e.g. from 26 to 25). In order not to interrupt the primary current, both taps are closed during an overlap period, which situation is illustrated in Fig. 4. The primary current $I_P$ through the primary winding mainly flows through tap 26 and the connected switch S2, as this tap corresponds to the smaller number of turns. However, as both switches S2 and S3 are closed, and as current is still induced in the winding section between taps 25 and 26, a short circuit current $I_{CC}$ exists between the short circuited taps 25 and 26. Tap 26 and the connected switching valve S2 accordingly experience $I_{CC}+I_P$, whereas the tap 25 and the connected switching valve S3 experience mainly $I_{CC}$.

It is preferred that no changeover impedance, such as an additional resistor or inductance, is connected to any of the taps 25-27 to limit such short circuit current $I_{CC}$. Rather, only the intrinsic tap resistance Rtap and inductance Ltap of the winding section between the taps is present in the circuit. The voltage induced across taps 25 and 26 is $V_P*nt$, $V_P$ being the primary voltage (voltage on the primary side) and nt being the fraction of turns of the primary winding section between taps 25 and 26 (i.e. nt herein refers to the percentage of turns of the respective winding, i.e. the number of turns between the taps divided by the total number of turns Np of the primary winding). Accordingly, as the intrinsic tap resistance is rather low, $I_{CC}$ can become very large. The instantaneous short circuit current can be calculated from the equation

$$nt*V_P(t) = Rtap * I_{CC}(t) + Ltap * dI_{CC}/dt$$

As described above with respect to Fig. 1, previous solutions have employed changeover impedances connected to the transformer taps to limit the short circuit current. The present solution may avoid such changeover impedances and reduce high short circuit currents $I_{CC}$ by appropriately controlling the instant of the switching of switching elements 31.

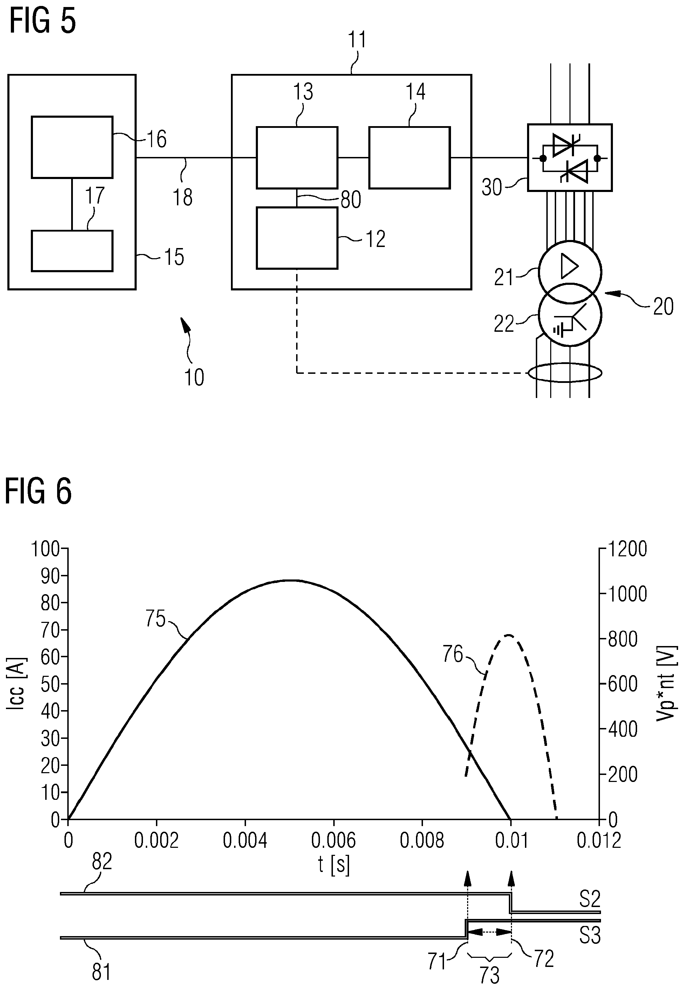

Fig. 5 illustrates an example of the control system 10, wherein the control system 10 may comprise a dedicated and separate tap changer controller 11. Control system 10 may comprise a timing control unit 12 that generates a timing control signal in accordance with any of the methods described herein. Unit 12 may obtain a measurement of the voltage on the secondary side of transformer 20, as such low voltage may be easier to measure and may thus simplify the controller configuration; the voltage may however alternatively be measured on the primary side of the transformer. It should be clear that the voltage measurement does not need to be performed directly at the transformer terminal, but may be performed at a different position, for example in the power generation system 50, e.g. at the power converter 40. Unit 12 may for example receive a voltage measurement made on the secondary side of transformer 20 from the converter control unit 15 that controls power converter 40. The power system is preferably a three-phase system, and unit 12 may monitor the voltage of each of the three phases to generate a timing control signal 80 for the tap change.

Control signal generator 13 may use the timing control signal 80 to generate a control signal for switching the semiconductor switches of switching elements 31 to effect a desired tap change. The control signal is then provided to a driver unit 14 which drives the one or more semiconductor switches to perform the tap change. Driver unit 14 may be an electric driver unit that provides an electric drive signal, such as pulses or a continuous signal, to the semiconductor switches of tap changer 30, or may be an optical drive unit that provides a drive signal in form of light, e.g. via an optical fiber, to light-triggered semiconductor switches, such as light-triggered thyristors. The latter implementation allows an efficient separation and electrical isolation of the controller circuits from the MV/HV voltages of primary winding 21.

Fig. 5 further illustrates a converter controller unit 15 that is configured to control the power converter 40 and in particular to provide driving signals to respective semiconductor switches of the power converter 40. For this purpose, it may comprise control circuits 16 and a PLL 17. The CCU 15 may measure the voltage on the low voltage side and may accordingly determine when a tap change is required, for example when the voltage drops below a respective threshold or rises above a respective threshold. A respective communication connection 18 may accordingly be provided between the CCU 15 and the tap changer controller 11 over which a tap change command can be issued by CCU 15. In response, the control signal generator 13, receiving the tap change command, may generate a tap change control signal to effect the desired tap change (please see the exemplary signals 81 and 82 in figure 6). The timing of the switching in the tap change control signal may be derived from the timing control signal 80 provided by unit 12.

In some examples, the CCU 15 may form part of the control system 10. In other examples, the CCU 15 may not be comprised in control system 10. The tap changer controller 11 may be separate and distinct from CCU 15 and may thus be easily retrofitted into an existing wind turbine. In other examples, the tap changer controller may be integrated in the CCU 15, which may accordingly form part of the control system 10. Such integration may provide a fast and efficient communication between the different components of control system 10.

In the example of Fig. 4, when changing from tap 26 to tap 25, this may for example comprise first connecting the new tap 25 by supplying a respective drive signal to the semiconductors 32 of switch S3 (e.g. a trigger pulse or signal supplied to the gate of a thyristor), and disconnecting thereafter tap 26, e.g. by ceasing to supply a respective drive signal to switch S2 connected to tap 26 (e.g. stopping the supply of a pulse or signal to the thyristor gate). During an overlap period, the switches S3, S2 connected to the new tap and the old tap, respectively, are closed and may accordingly be supplied with a respective drive signal from drive unit 14.

To avoid high values of the short circuit current ICC, the switch to connect the new tap may be closed shortly prior to the occurrence of a zero crossing of the tap voltage, i.e. the voltage present at the presently connected transformer tap. The timing of the tap change, in particular of closing the switch connected to the new tap, may be controlled by the timing control signal provided by unit 12.

Figure 6 shows a diagram that illustrates the waveform of the tap voltage 75 and of the short circuit current $I_{CC}$ 76, as well as an exemplary control signal that comprises control signals 81 and 82 which control the switches S2 and S3 of figure 4, respectively. The 50 Hz waveform of the tap voltage has a zero crossing at a time t = 0.01 s. For changing from tap 26 to tap 25, the switch S3 connected to the new tap 25 is closed at a predetermined time 71 prior to the zero crossing (switching point), which in the present example is 1 ms (as can be taken from control signal 81). As can further be seen, the control signal 82 still causes the supply of a drive signal to the switch S2 connected to the old tap 26, so that both switches are closed and both taps are short circuited during the overlap period 73 and the short circuit current $I_{CC}$ flows. $I_{CC}$ is inductive and may be significantly higher that than the operating current of the transformer. $I_{CC}$ lags the tap voltage by about 90 degrees or $\pi/2$. $I_{CC}$ thus reaches its peak at about the voltage zero crossing. By closing switch S3 shortly prior to the zero crossing, the magnitude and duration of $I_{CC}$ may be kept small.

After the overlap period (1 ms in the present example), the switch S2 connected to the old tap is allowed to open at a second predetermined time 72, which is close to the zero crossing. As indicated by control signal 82, this may occur by no further providing a respective drive signal to the switch S2, e.g. by not providing a trigger (e.g. voltage, current, or light) to the gate of the semiconductor switches of switch S2. The short circuit current is however not interrupted immediately, since the switch S2 remains conducting until the current through the switch S2 has a zero crossing (e.g., the thyristor remains in a conducting state). As soon as this occurs, the switch will open (i.e. not conducting) and the short circuit current $I_{CC}$ is interrupted, so that the old tap is no longer connected.

When implementing the switching element 31 differently, for example by means of a triac, an electro-mechanical switch or an connection of two IGBTs, IGCTs, or MOSFETS, the situation might be different. For example, opening the switch may then directly interrupt the short circuit current. The second predetermined time 72 may then be chosen such that the switch is opened at a zero-crossing of the short circuit current through the old tap, i.e. the tap to be disconnected. The switch S2 may for example be opened at the zero crossing of curve 76, which occurs at about 0.011 s. The overlap period 73 may then last from the first predetermined time 71 prior to the voltage zero crossing to the second predetermined time 72 at the short circuit current zero crossing. The current that needs to be interrupted when disconnecting the old tap may thus be reduced significantly.

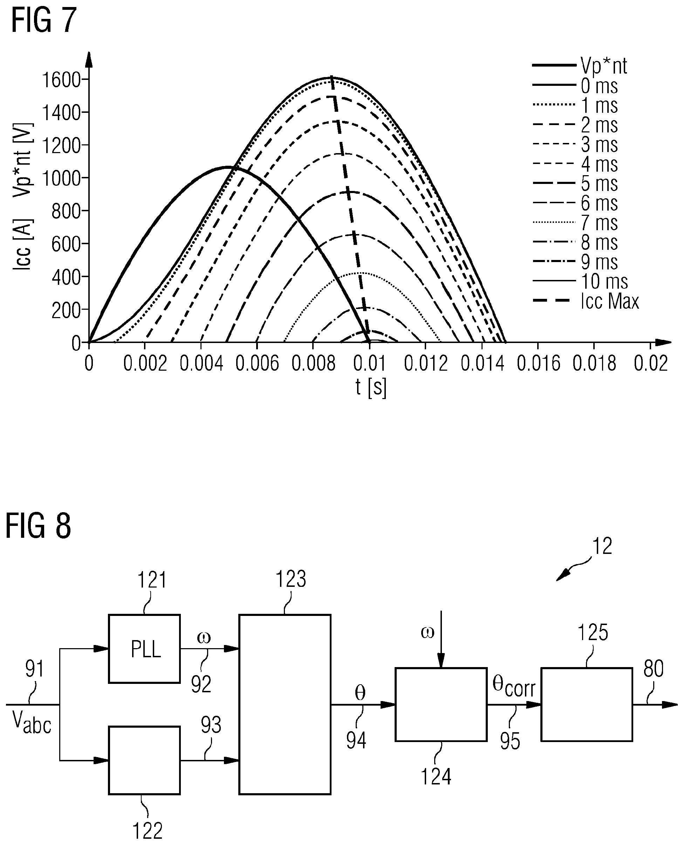

The diagram of Fig. 7 illustrates the short circuit currents $I_{CC}$ that may result from switching at different times between taps. The vertical axis shows both, the short circuit currents $I_{CC}$ in units of A and the voltage at the tap $V_P*nt$ in units of V. The example is for a 50 Hz voltage waveform, and the thick solid line indicates the tap voltage having zero-crossings at 0, 0.01 s and 0.02 s, similar to figure 6. The thinner lines indicate short circuit current $I_{CC}$ that is caused by closing the switching element connected to the new tap at different times, which are indicated in the legend. As can be seen, if the switch is closed a long time prior to the zero-crossing occurring at 0.01 s (i.e. 10 ms), the short circuit current $I_{CC}$ rises to high values, up to 1.600 A in the present example. On the other hand, if the switch is closed shortly prior to the zero-crossing at 10 ms (e.g. at a time of 8 ms or 9 ms), the maximum short circuit current is reduced significantly. The thick dashed line indicates how the peak value of $I_{CC}$ behaves for the different timing of the switching of switch 31 prior to the zero crossing. It is noted that the $I_{CC}$ line for switching the switch at 0 ms (rounded) relates to a switching that occurred shortly after the zero crossing of the tap voltage at t = 0 ms, and that the $I_{CC}$ line for switching the switch at 10 ms (rounded) relates to a switching that occurred shortly prior to the zero crossing of the tap voltage at t = 10 ms.

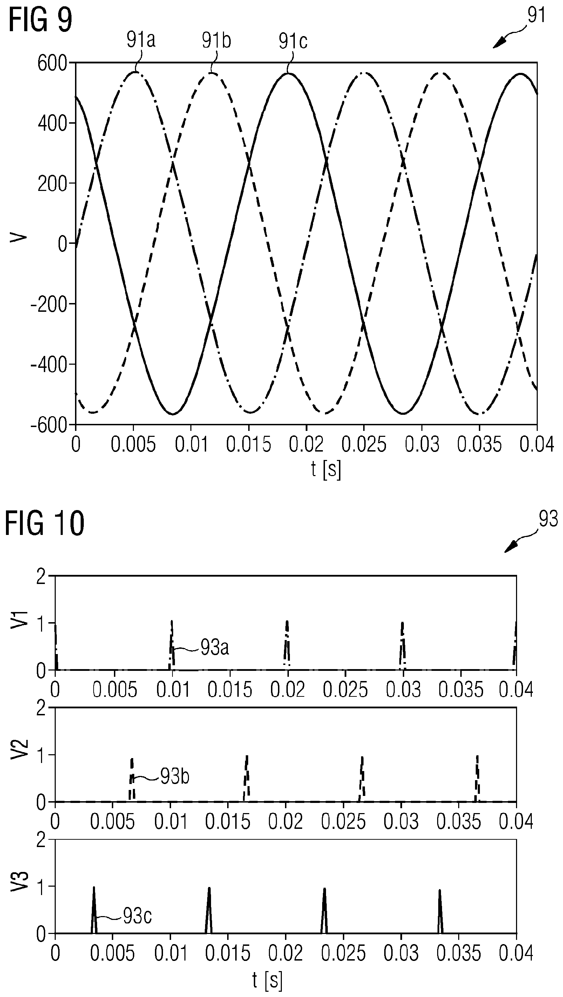

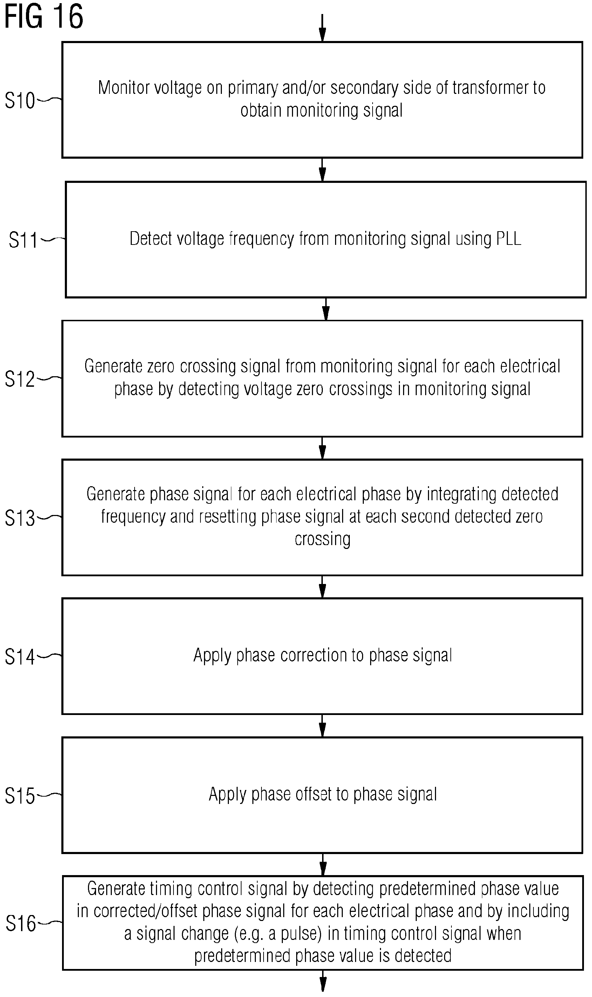

To achieve the desired reduction in short circuit current, it is desirable to precisely derive the point in time at which the switching is to occur, i.e. the switching point 71 prior to the tap voltage zero crossing. Figure 8 illustrates an exemplary implementation of a timing control unit 12 that may perform the method illustrated in the flow diagram of figure 16. A monitoring signal 91 may be received by unit 12, which corresponds to the monitored voltage $V_{abc}$, which as mentioned above may be monitored at the power converter 40 or at another position in the power system. As the monitored voltage may be a three phase voltage, the monitoring signal 91 may be a three phase signal, as indicated by indexes a, b and c. The monitoring of the voltage is indicated at step S10 in the flow diagram of figure 16. An exemplary three phase monitoring signal 91 is shown in figure 9, with the voltage signals 91a, 91b and 91c for the respective electrical phases.

A three phase PLL 121, in particular a positive sequence PLL, may be provided and used to detect an (angular) frequency $\omega$ (e.g. in radians per second) of the monitored voltage (step S11 in figure 16). The PLL may be a synchronous reference frame PLL (SRF-PLL). The PLL may be a PLL of the CCU 15 (e.g. the PLL 17), e.g. in implementations in which the controller 11 is integrated in the CCU 15, or may be an additional PLL. In the present example, the angular frequency is $2\pi/20ms = 314.2$ rad/s. A voltage zero crossing detector (ZCD) 122 may further be provided and may be used to detect zero crossings in the monitoring signal 91. This may occur by comparing the instantaneous voltage values with first and second fixed voltage thresholds around zero volt for each electrical phase. These thresholds may be chosen under consideration of the sampling rate employed by unit 12 and the rated grid frequency (e.g. 50 or 60Hz), so that zero crossings are reliably detected. The monitoring signal is preferably free of high order harmonics that may cause a failure of the zero crossing detector. The monitoring signal may for example be filtered to remove respective harmonics. As soon as the value of the monitoring signal enters the range between the thresholds around zero, a signal value may be given out, thereby generating a zero crossing signal 93 for each phase (step S12 in figure 16). An exemplary zero crossing signal 93 for three phases is illustrated in figure 10. As can be seen, the zero crossing signal 93 comprises spikes at the positions at which the corresponding monitored voltage $V_{abc}$ crosses the zero value (i.e. at which the voltage value is between the thresholds).

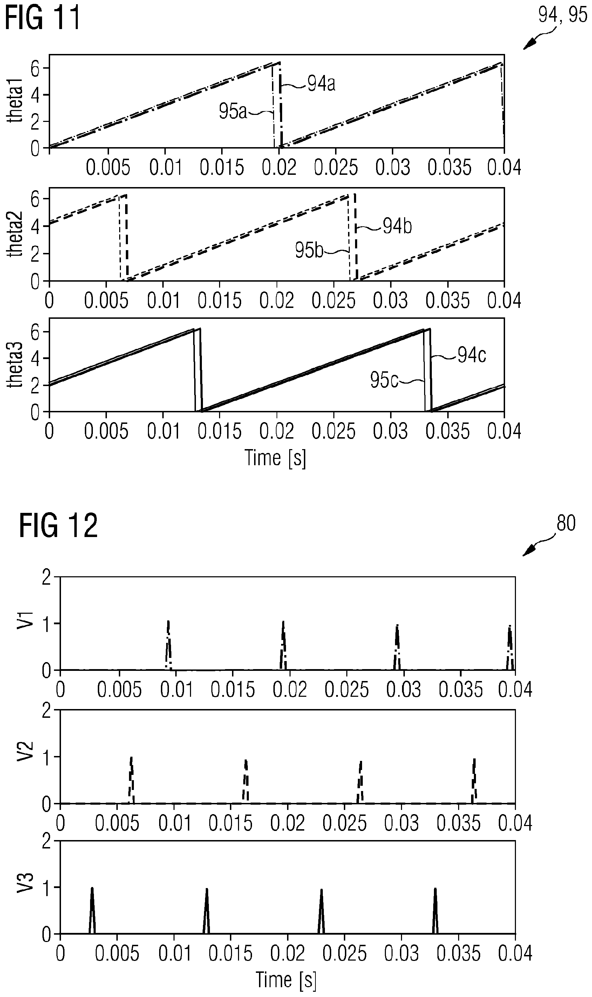

An integrator 123 may further be provided, which is configured to estimate a phase of the monitored voltage by starting at a phase value of zero upon detection of a zero crossing and integrating the detected frequency $\omega$. A phase signal 94 that indicates the phase $\theta$ of the monitored voltage for each electrical phase may thereby be obtained (step S13 in figure 16). Each or each second zero crossing in the respective zero crossing signal 93 may reset the count of the integrator. It may be reset at each second zero crossing to a value of 0, or may be reset at each zero crossing alternatingly to a value of 0 and $\pi$, so that the value of the phase signal 94 varies between 0 and $2\pi$. Since the resetting is based on the detected zero crossings, the phase signal may accurately reflect the phase of the monitored voltage. Again, this is done for each electrical phase, so that the phase signal 94 may comprise the three components 94a, 94b and 94c illustrated in figure 11. The phase values of $0/2\pi$ and $\pi$ of the phase signal may occur at the same time as the zero crossings of the monitored voltage.

However, these zero crossings may not correspond to the zero crossings of the tap voltage at the transformer tap, as phase shifts/delays may be present in the electrical path between the location of the monitoring and the transformer tap (e.g. the path between power converter 40 and tap changer 30), and since delays/phase shifts may be introduced by the signal processing. For example, a data acquisition board may comprise an analog anti-aliasing filter to adapt the input signal to the sampling rate of the electronics, and the monitoring signal may be delayed by such filtering. Further, digital filtering to remove the above-mentioned high frequency content (harmonics) may introduce a delay. A phase correction unit 124 may thus be provided which applies a phase correction to the phase signal 94 (step S14 of figure 16). A corrected phase signal 95 may thereby be obtained, with a corrected phase $\theta_{corr}$. The phase correction unit 124 may further receive the detected frequency $\omega$ to convert any delays given in units of time to a respective phase shift. A total time delay may be determined and may be multiplied by the angular frequency, and the resulting phase shift may be added to the phase value of the phase signal 94. It is noted that by adding such phase correction, the phase value of $\pi$ may occur earlier in the corrected phase signal, so that the time at which the phase value occurs may quite accurately correspond to the time at which the real zero crossing of the tap voltage occurs, even though there is delay. When adding the phase correction, phase values exceeding $2\pi$ may be wrapped back into the phase value range of 0 to $2\pi$. The phase jump from $2\pi$ to zero may thus effectively occur earlier in the corrected phase signal, so that adding the phase correction corresponds to shifting the phase signal to earlier times. Figure 11 illustrates the corrected phase signals 95a, 95b and 95c for the three electrical phases.

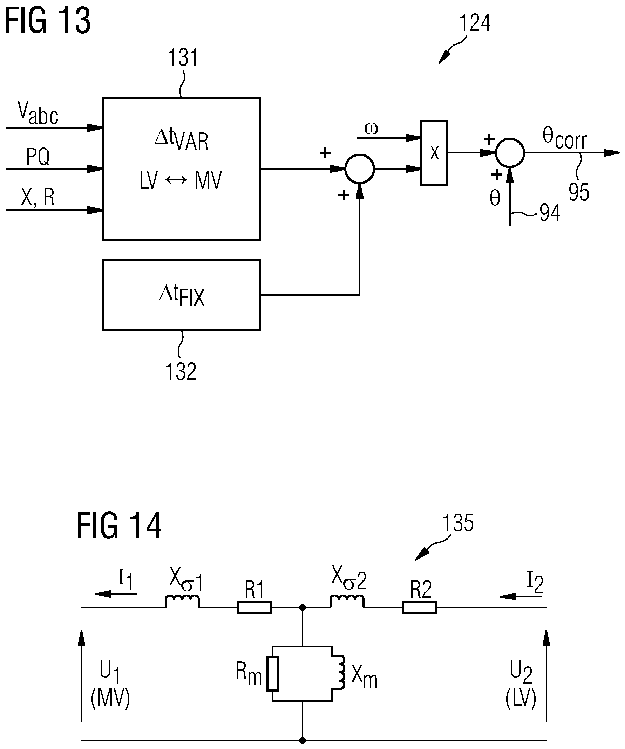

The phase correction is illustrated in more detail in figure 13. It may comprise a fixed phase correction 132 corresponding to a fixed phase shift or delay $\Delta t_{FIX}$ and/or a dynamic phase correction 131 corresponding to a variable phase shift or delay $\Delta t_{VAR}$ which may change during operation of the wind turbine. The fixed phase correction 132 may for example comprise the above-mentioned corrections for delays in the signal processing of the monitoring signal, and/or may comprise a phase shift introduced by electrical connections between the location of the monitoring and the transformer tap (e.g. if the transformer 20 is placed on a ground floor of the wind turbine) or other electric circuits connected between the location of the monitoring and the transformer tap, such as a filter placed between the power converter 40 and the transformer 20 when monitoring occurs at the power converter 40 (e.g. by CCU 15).

A dynamic phase shift may for example be introduced by transformer 20, for example if the monitoring occurs on the secondary side of the transformer and the transformer taps are provide on the primary winding 21 of the transformer (or vice versa). Such phase shift may depend on the active and reactive power set points of the power generating system 50 of the wind turbine. Figure 14 illustrates a model 135 of transformer 20, in particular an equivalent circuit which may also be termed T-model. The model 135 comprises a series branch, with the leakage inductance ($X_{\sigma1}$, $X_{\sigma2}$) and the windings resistance ($R_1$, $R_2$), and a parallel branch, with the magnetizing inductance $X_m$ and a resistance $R_m$ modelling the iron losses. The existence of the series branch causes a voltage drop in the transformer when the current $I_1$, $I_2$ flows through it. Depending on the active and reactive current generated by the power generation system 50, this voltage drop may cause a phase shift (termed transformer phase shift herein) between the primary and secondary side voltages $U_1$, $U_2$. The transformer phase shift may be estimated from the monitoring signal (voltage $V_{abc}$), the active and reactive power set points (P and Q, respectively) and the model 135 of the transformer 20, as represented by X, R in figure 13.

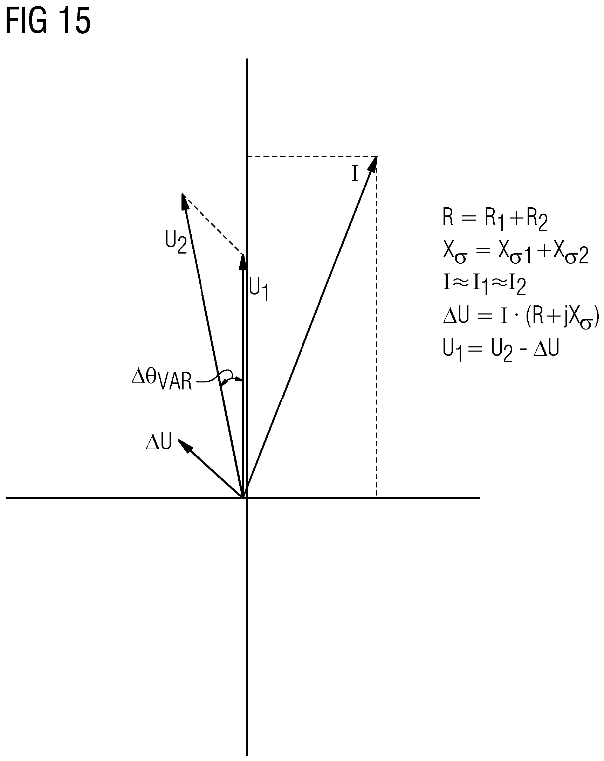

In figure 14, $U_2$ is the voltage on the secondary side 22, where the monitoring signal is obtained, and $U_1$ is the voltage on the primary side 21, where the transformer taps are provided. For the estimation, the magnetizing branch (parallel branch) may be neglected, so that $I=I_1=I_2$. The phase difference between $U_1$ and $U_2$ can be estimated from the vector diagram of figure 15. The voltage drop across the series branch corresponds to $\Delta U = I * ((R1+R2) + j(X_{\sigma1}+X_{\sigma2}))$. From the voltage drop $\Delta U$ and the measured voltage $U_2$, the voltage $U_1$ can be derived in the vector diagram of figure 15 ($U_1 = U_2 - \Delta U$). The variable transformer phase shift $\Delta\theta_{var}$ may thus be derived from the vector diagram, in particular from the angle between the voltage vectors $U_1$ and $U_2$. This may be done individually for each electrical phase. It may be recognized that as the active and/or reactive power setpoints of power generating system 50 change, the vectors I, $U_2$ and their phase relationship may change, thus resulting in a variation of the transformer phase shift.

Such variable phase shift or delay is compensated by the dynamic phase correction 131 shown in figure 13. As shown in figure 13, the fixed and dynamic phase corrections 132, 131 may each provide a correction value in form of a delay, which may be multiplied by the detected frequency $\omega$ to obtain a phase correction value that is added to the phase signal 94 to obtain the corrected phase signal 95.

The corrected phase signal 95 may be an intermediate signal that indicates the zero crossings of the tap voltage at phase values of $0/2\pi$ and $\pi$. A detector 125 may be provided to detect predetermined phase values in the corrected phase signal 95 to generate the timing control signal 80. The detector 125 may be termed 'angle zero crossing detector' (ZCD), as it may detect phase angles that correspond to a zero crossing of the tap voltage. It may work similar to the voltage ZCD 122 by providing first and second phase thresholds around the predetermined phase value to be detected, and comparing the instantaneous phase values of the corrected phase signal 95 to these thresholds. If the phase value lies between the thresholds, a change in the output signal (i.e. the timing control signal) may be generated, such as a pulse or spike. Again, this may be performed individually for each electrical phase. Figure 12 illustrates the timing control signal 80 derived for the three electrical phases from the corrected phase signal 95 of figure 11. As can be seen, by considering the delay, the pulses indicating the zero crossing of the tap voltage are shifted to earlier times compared to the zero crossings indicated in the zero crossing signal 93 of figure 10.

The predetermined phase value that is detected by detector 125 may correspond to $0/2\pi$ and $\pi$. To detect the zero crossing at the phase value of $0/2\pi$, at which a discontinuity exists in the corrected phase signal 95, a value of $\pi$ may simply be added to the corrected phase signal 95, and values exceeding $2\pi$ may again be wrapped into the value range between 0 and $2\pi$. This effectively shifts the signal such that the zero crossing can again be detected at a phase value of $\pi$. The same phase thresholds may thus be used for detecting the zero crossings at phase values of $0/2\pi$ and $\pi$.

In the timing control signal 80 that is exemplarily illustrated in figure 12, the pulses correspond to the actual zero crossings of the tap voltage (e.g. at the connected transformer tap 26). This signal may be provided to the control signal generator 13 to generate the control signal to perform a tap change at the desired switching time. Signal 80 may in particular provide precise knowledge about the zero crossings of the tap voltage, so that the switching of switching elements 31 can occur at the desired point in time prior to the zero crossing.

In other examples, the timing control signal 80 may be derived such that the signal changes in the timing control signal 80 may correspond to the predetermined time at which the switching should occur, i.e. they may correspond to respective switching points. Such timing control signal 80 may be generated by applying a phase offset to the phase signal 94 or the corrected phase signal 95 (step S15 in figure 16). The resulting offset phase signal may be an intermediate signal that is still indicative of the zero crossings of the tap voltage (however not at phase values of $0/2\pi$ or $\pi$, but at respectively shifted phase values). The phase offset may correspond to the predetermined time 71 prior to the zero crossing, it may for example be determined by multiplying the desired amount of time with the detected frequency. The phase offset may for example be applied when applying the phase correction in unit 124. The desired time prior to the zero crossing may for example be added as an additional fixed delay in the example of figure 13 when summing the variable and fixed delays 131, 132. Consequently, the phase value of $\pi$ in the corrected phase signal may occur earlier than the actual zero crossing of the tap voltage, so that the pulse in timing control signal 80 is generated at an earlier point in time. The timing control signal 80 provided to control signal generator 13 may thus directly indicate the point in time at which the switching of the switching element 31 is to occur during the tap change. The generation of the signal for switching the semiconductor switch to effect the tap change may thus be facilitated and a more precise timing may be achieved. The timing control signal 80 may in particular comprise a train of pulses that may be used for firing of the thyristors of the switching element of each electrical phase.

Control system 10 may comprise a processing unit 61, which may comprise a microprocessor, an application specific integrated circuit, a programmable logic device (PLD) such as a field programmable gate array (FPGA), a digital signal processor or the like. It may further comprise a memory 62, which may comprise volatile and non-volatile memory, in particular a hard disc drive, flash memory, RAM, ROM, EEPROM and the like. Memory 62 may store control instructions which when executed by processing unit 61 may cause the processing unit 61 to perform any of the methods disclosed herein. The control instructions, in particular respective software code, may for example implement the timing control unit 12 and its components illustrated in figure 8. Control system 10 may comprise further components not explicitly shown, such as input/output interfaces to data sources and/or to the components to be controlled, a user interface including a display and an input unit, and other components common to a computer system.

By generating the timing control signal in the above described way, major sources of error that may cause a wrong detection of the zero crossings may be considered and compensated. Both fixed time delays and variable phase shifts, e.g. caused by the voltage drop in the transformer, may be compensated. The timing control signal generation may be PLL based and may provide a high accuracy in the detection of the actual zero crossings of the tap voltage. This may make it possible to switch the switching elements at the most suitable moment to reduce short circuit current during the tap changing process without using changeover impedances. Further, the solution may provide information on the instant of the individual zero-crossings of the tap voltage for each electrical phase. The precision of the detection of the zero crossing may thus be improved for each electrical phase.

While specific embodiments are disclosed herein, the present embodiments are to be considered in all respects as illustrative and non-restrictive.

**Claims**

1.   A method of generating a timing control signal (80) for controlling the timing of a change of a transformer tap of a transformer (20), wherein the transformer (20) comprises an on-load tap changer (30) comprising plural respective transformer taps (25-27), wherein the method comprises:

- monitoring a voltage on a primary side and/or on a secondary side of the transformer (20) to obtain a monitoring signal (91);
- deriving, from the monitoring signal (91), an intermediate signal (95) that is indicative of at least one zero crossing of a tap voltage at the transformer tap (25-27), wherein deriving the intermediate signal (95) comprises estimating, based on the monitoring signal (91), a phase of the monitored voltage to obtain a phase signal (94) and applying to the phase signal a phase correction for a phase shift between the monitoring signal (91) or a signal derived therefrom and the tap voltage at the transformer tap (25-27); and
- deriving the timing control signal (80) from the intermediate signal (95).

2. The method according to claim 1, wherein the transformer taps (25-27) are provided at least on the primary side of the transformer (20), and wherein the voltage is monitored on the secondary side of the transformer (20), wherein applying the phase correction comprises estimating a transformer phase shift ($\Delta\theta_{VAR}$) between a voltage on the primary side of the transformer and a voltage on the secondary side of the transformer and applying a phase correction for the transformer phase shift.

3. The method according to claim 2, wherein estimating the transformer phase shift ($\Delta\theta_{VAR}$) comprises obtaining information indicating a phase difference between the monitored voltage and a current on the secondary side of the transformer (20) and deriving the transformer phase shift from a model (135) of the transformer (20) that uses the monitored voltage and the obtained information as input, and/or comprises determining a phase shift due to a winding connection type of the transformer, in particular a vector group of the transformer.

4. The method according to any of the preceding claims, wherein applying the phase correction comprises applying a fixed phase correction (132) by which the phase signal is corrected by a fixed value and/or applying a dynamic phase correction (131) by which the phase signal is corrected by a variable value that is allowed to change during operation.

5. The method according to any of the preceding claims, wherein applying the phase correction comprises one or a combination of:

- applying a correction for a delay introduced by acquiring the monitoring signal (91) by digital data acquisition;
- applying a correction for a delay introduced by code execution by a processing unit deriving the timing control signal;
- applying a correction for a delay introduced by filtering the monitored voltage or the monitoring signal (91);
- applying a correction for a phase shift introduced by an electric connection between a position at which the voltage is monitored and a location of the transformer (20);
- applying a correction for a phase shift introduced by an electric circuit in an electrical path between the position at which the voltage is monitored and the location of the transformer (20);
- applying a correction for a phase shift introduced by a configuration of connections of primary and secondary windings of the transformer, or
- applying a dynamic phase correction for a phase shift introduced by the transformer (20).

6. The method according to any of the preceding claims, wherein the transformer (20) is a three phase transformer comprising transformer windings for three electrical phases, and wherein the on-load tap changer comprises transformer taps (25-27) for each of the three electrical phases of the transformer (20), wherein the phase signal (94) is estimated individually for each of the three electrical phases and/or wherein the phase correction is applied individually for each of the three electrical phases and/or wherein the timing control signal (80) is derived individually for each of the three electrical phases.

7. The method according to any of the preceding claims, wherein estimating the phase of the monitored voltage to obtain the phase signal (94) comprises using a zero crossing detector (122) to detect at least one zero crossing (93) of the monitoring signal (91).

8. The method according to claim 7, wherein detecting the at least one zero crossing of the monitoring signal (91) by the zero crossing detector (122) comprises using at least a first voltage threshold above a zero voltage value and a second voltage threshold below a zero voltage value and determining the presence of a zero crossing if the monitoring signal (91) has a value between the first voltage threshold and the second voltage threshold.

9. The method according to any of the preceding claims, wherein estimating the phase of the monitored voltage to obtain the phase signal comprises using a phase locked loop, PLL, (121) to detect a frequency (92) of the monitored voltage.

10. The method according to claim 9 and according to claim 7 or 8, wherein the phase signal (94) is generated by an integrator (123) that uses the detected zero crossing (93) of the monitoring signal and the detected frequency (92) of the monitored voltage as inputs.

11. The method according to any of the preceding claims, wherein deriving the timing control signal (80) from the intermediate signal (95) comprises:

   - detecting, in said intermediate signal (95), the occurrence of at least one predetermined phase value; and
   - generating the timing control signal (80) based on the detection of the at least one predetermined phase value by generating a signal change in the timing control signal (80) at the instant at which the predetermined phase value is detected.

12. The method according to any of the preceding claims, wherein the method further comprises applying a predetermined phase offset to the phase signal (94, 95) prior to the deriving of the timing control signal (80).

13. A method of controlling an on-load tap changer (30) of a transformer (20) to perform a tap change from a first transformer tap (26) to a second transformer tap (25), wherein the method comprises:

   - determining a timing control signal (80) according to the method of any one of claims 1-12;
   - detecting a triggering event to trigger the tap change;
   - upon detecting the triggering event, deriving, based on the timing control signal (80), a drive signal (81) for switching a switching element (31) coupled to the second transformer tap (25); and
   - applying the drive signal (81) to the switching element (31) of the second transformer tap (25) to perform the tap change.

14. A control system configured to control the changing of a transformer tap of a transformer, wherein the transformer (20) comprises an on-load tap changer (30) comprising plural respective transformer taps (25-27), wherein the control system (10) is configured to perform the method of any one of the preceding claims.

15. A computer program for generating a timing control signal for controlling the timing of a change of a transformer tap (25-27) of a transformer (20), wherein the computer program comprises control instructions which, when executed by a processing unit (61) of a control system (10) that controls an on-load tap changer (30) of the transformer (20), cause the processing unit (61) to perform the method of any one of claims 1-13.

**Patentansprüche**

1. Verfahren zum Erzeugen eines Zeitplanungssteuersignals (80) zum Steuern der Zeitplanung einer Änderung einer Transformatoranzapfung eines Transformators (20), wobei der Transformator (20) einen Lastschalter (30) umfasst, der mehrere jeweilige Transformatoranzapfungen (25-27) umfasst, wobei das Verfahren Folgendes umfasst:

   - Überwachen einer Spannung an einer Primärseite und/oder an einer Sekundärseite des Transformators (20), um ein Überwachungssignal (91) zu erlangen;
   - Ableiten, aus dem Überwachungssignal (91), eines Zwischensignals (95), das mindestens einen Nulldurchgang einer Anzapfungsspannung an der Transformatoranzapfung (25-27) anzeigt, wobei das Ableiten des Zwischensignals (95) Schätzen einer Phase der überwachten Spannung basierend auf dem Überwachungssignal (91), um ein Phasensignal (94) zu erlangen, und Anwenden einer Phasenkorrektur auf das Phasensignal für eine Phasenverschiebung zwischen dem Überwachungssignal (91) oder einem daraus abgeleiteten Signal und der Anzapfungsspannung an der Transformatoranzapfung (25-27) umfasst; und
   - Ableiten des Zeitplanungssteuersignals (80) aus dem Zwischensignal (95).

2. Verfahren nach Anspruch 1, wobei die Transformatoranzapfungen (25-27) mindestens auf der Primärseite des Transformators (20) bereitgestellt sind und wobei die Spannung auf der Sekundärseite des Transformators (20) überwacht wird, wobei das Anwenden der Phasenkorrektur Schätzen einer Transformatorphasenverschiebung $(\Delta\theta_{VAR})$ zwischen einer Spannung auf der Primärseite des Transformators und einer Spannung auf der Sekundärseite des Transformators und Anwenden einer Phasenkorrektur für die Transformatorphasenverschiebung umfasst.

3.  Verfahren nach Anspruch 2, wobei das Schätzen der Transformatorphasenverschiebung ($\Delta\theta_{VAR}$) Erlangen von Informationen, die eine Phasendifferenz zwischen der überwachten Spannung und einem Strom auf der Sekundärseite des Transformators (20) anzeigen, und Ableiten der Transformatorphasenverschiebung aus einem Modell (135) des Transformators (20), das die überwachte Spannung und die erlangten Informationen als Eingabe verwendet, umfasst und/oder Bestimmen einer Phasenverschiebung aufgrund eines Wicklungsverbindungstyps des Transformators, insbesondere einer Schaltgruppe des Transformators, umfasst.

4.  Verfahren nach einem der vorhergehenden Ansprüche, wobei das Anwenden der Phasenkorrektur Anwenden einer festen Phasenkorrektur (132), wodurch das Phasensignal um einen festen Wert korrigiert wird, und/oder Anwenden einer dynamischen Phasenkorrektur (131), wodurch das Phasensignal um einen variablen Wert korrigiert wird, der sich während des Betriebs ändern darf, umfasst.

5.  Verfahren nach einem der vorhergehenden Ansprüche, wobei das Anwenden der Phasenkorrektur eines oder eine Kombination des Folgenden umfasst:

    - Anwenden einer Korrektur für eine Verzögerung, die durch Erfassen des Überwachungssignals (91) durch digitale Datenerfassung eingebracht wird;
    - Anwenden einer Korrektur für eine Verzögerung, die durch Codeausführung durch eine Verarbeitungseinheit, die das Zeitplanungssteuersignal ableitet, eingebracht wird;
    - Anwenden einer Korrektur für eine Verzögerung, die durch Filtern der überwachten Spannung oder das Überwachungssignal (91) eingebracht wird;
    - Anwenden einer Korrektur für eine Phasenverschiebung, die durch eine elektrische Verbindung zwischen einer Position, an der die Spannung überwacht wird, und einem Standort des Transformators (20) eingebracht wird;
    - Anwenden einer Korrektur für eine Phasenverschiebung, die durch eine elektrische Schaltung in einem elektrischen Pfad zwischen der Position, an der die Spannung überwacht wird, und dem Standort des Transformators (20) eingebracht wird;
    - Anwenden einer Korrektur für eine Phasenverschiebung, die durch eine Konfiguration von Verbindungen der Primär- und Sekundärwicklungen des Transformators eingebracht wird, oder
    - Anwenden einer dynamischen Phasenkorrektur für eine Phasenverschiebung, die durch den Transformator (20) eingebracht wird.

6.  Verfahren nach einem der vorhergehenden Ansprüche, wobei der Transformator (20) ein Dreiphasentransformator ist, der Transformatorwicklungen für drei elektrische Phasen umfasst, und wobei der Lastschalter Transformatoranzapfungen (25-27) für jede der drei elektrischen Phasen des Transformators (20) umfasst, wobei das Phasensignal (94) individuell für jede der drei elektrischen Phasen geschätzt wird und/oder wobei die Phasenkorrektur individuell für jede der drei elektrischen Phasen angewendet wird und/oder wobei das Zeitplanungssteuersignal (80) individuell für jede der drei elektrischen Phasen abgeleitet wird.

7.  Verfahren nach einem der vorhergehenden Ansprüche, wobei das Schätzen der Phase der überwachten Spannung, um das Phasensignal (94) zu erlangen, Verwenden eines Nulldurchgangsdetektors (122) dazu, mindestens einen Nulldurchgang (93) des Überwachungssignals (91) zu detektieren, umfasst.

8.  Verfahren nach Anspruch 7, wobei das Detektieren des mindestens einen Nulldurchgangs des Überwachungssignals (91) durch den Nulldurchgangsdetektor (122) Verwenden mindestens eines ersten Spannungsschwellenwerts oberhalb eines Nullspannungswerts und eines zweiten Spannungsschwellenwerts unterhalb eines Nullspannungswerts und Bestimmen des Vorhandenseins eines Nulldurchgangs, wenn das Überwachungssignal (91) einen Wert zwischen dem ersten Spannungsschwellenwert und dem zweiten Spannungsschwellenwert aufweist, umfasst.

9.  Verfahren nach einem der vorhergehenden Ansprüche, wobei das Schätzen der Phase der überwachten Spannung, um das Phasensignal zu erlangen, Verwenden einer Phasenregelschleife, PLL, (121) dazu, eine Frequenz (92) der überwachten Spannung zu detektieren, umfasst.

10. Verfahren nach Anspruch 9 und nach Anspruch 7 oder 8, wobei das Phasensignal (94) durch einen Integrator (123) erzeugt wird, der den detektierten Nulldurchgang (93) des Überwachungssignals und die detektierte Frequenz (92) der überwachten Spannung als Eingaben verwendet.

**11.** Verfahren nach einem der vorhergehenden Ansprüche, wobei das Ableiten des Zeitplanungssteuersignals (80) aus dem Zwischensignal (95) Folgendes umfasst:

- Detektieren, in dem Zwischensignal (95), des Auftretens von mindestens einem vorbestimmten Phasenwert; und
- Erzeugen des Zeitplanungssteuersignals (80) basierend auf der Detektion des mindestens einen vorbestimmten Phasenwerts durch Erzeugen eines Signalwechsels in dem Zeitplanungssteuersignal (80) in dem Moment, in dem der vorbestimmte Phasenwert detektiert wird.

**12.** Verfahren nach einem der vorhergehenden Ansprüche, wobei das Verfahren ferner Anwenden eines vorbestimmten Phasenversatzes auf das Phasensignal (94, 95) vor dem Ableiten des Zeitplanungssteuersignals (80) umfasst.

**13.** Verfahren zum Steuern eines Lastschalters (30) eines Transformators (20) zum Durchführen eines Anzapfungswechsels von einer ersten Transformatoranzapfung (26) zu einer zweiten Transformatoranzapfung (25), wobei das Verfahren Folgendes umfasst:

- Bestimmen eines Zeitplanungssteuersignals (80) gemäß dem Verfahren nach einem der Ansprüche 1-12;
- Detektieren eines auslösenden Ereignisses zum Auslösen des Anzapfungswechsels;
- beim Detektieren des auslösenden Ereignisses, Ableiten, basierend auf dem Zeitplanungssteuersignal (80), eines Antriebsignals (81) zum Schalten eines Schaltelements (31), das mit der zweiten Transformatoranzapfung (25) gekoppelt ist; und
- Anwenden des Antriebssignals (81) auf das Schaltelement (31) der zweiten Transformatoranzapfung (25) zum Durchführen des Anzapfungswechsels.

**14.** Steuersystem, das dazu konfiguriert ist, den Wechsel einer Transformatoranzapfung eines Transformators zu steuern, wobei der Transformator (20) einen Lastschalter (30) umfasst, der mehrere jeweilige Transformatoranzapfungen (25-27) umfasst, wobei das Steuersystem (10) dazu konfiguriert ist, das Verfahren nach einem der vorhergehenden Ansprüche durchzuführen.

**15.** Computerprogramm zum Erzeugen eines Zeitplanungssteuersignals zum Steuern der Zeitplanung eines Wechsels einer Transformatoranzapfung (25-27) eines Transformators (20), wobei das Computerprogramm Steueranweisungen umfasst, die, wenn sie durch eine Verarbeitungseinheit (61) eines Steuersystems (10) ausgeführt werden, das einen Lastschalter (30) des Transformators (20) steuert, die Verarbeitungseinheit (61) dazu veranlassen, das Verfahren nach einem der Ansprüche 1-13 durchzuführen.

**Revendications**

**1.** Procédé de génération d'un signal de commande de synchronisation (80) pour commander la synchronisation d'un changement d'une prise de transformateur d'un transformateur (20), dans lequel le transformateur (20) comprend un changeur de prise en charge (30) comprenant plusieurs prises de transformateur respectives (25-27), dans lequel le procédé comprend :

- la surveillance d'une tension sur un côté primaire et/ou sur un côté secondaire du transformateur (20) pour obtenir un signal de surveillance (91) ;
- la dérivation, à partir du signal de surveillance (91), d'un signal intermédiaire (95) qui indique au moins un passage par zéro d'une tension de prise au niveau de la prise de transformateur (25-27), dans lequel la dérivation du signal intermédiaire (95) comprend l'estimation, sur la base du signal de surveillance (91), d'une phase de la tension surveillée pour obtenir un signal de phase (94) et l'application au signal de phase d'une correction de phase pour un déphasage entre le signal de surveillance (91) ou un signal dérivé de celui-ci et la tension de prise au niveau de la prise de transformateur (25-27) ; et
- la dérivation du signal de commande de synchronisation (80) à partir du signal intermédiaire (95).

**2.** Procédé selon la revendication 1, dans lequel les prises de transformateur (25-27) sont prévues au moins sur le côté primaire du transformateur (20), et dans lequel la tension est surveillée sur le côté secondaire du transformateur (20), dans lequel l'application de la correction de phase comprend l'estimation d'un déphasage de transformateur (($\Delta\theta_{VAR}$)) entre une tension sur le côté primaire du transformateur et une tension sur le côté secondaire du transformateur et l'application d'une correction de phase pour le déphasage de transformateur.

**3.** Procédé selon la revendication 2, dans lequel l'estimation du déphasage de transformateur ($\Delta\Theta_{VAR}$) comprend l'obtention d'informations indiquant une différence de phase entre la tension surveillée et un courant sur le côté secondaire du transformateur (20) et la dérivation du déphasage de transformateur à partir d'un modèle (135) du transformateur (20) qui utilise la tension surveillée et les informations obtenues comme entrée, et/ou comprend la détermination d'un déphasage dû à un type de connexion d'enroulement du transformateur, en particulier un groupe vectoriel du transformateur.

**4.** Procédé selon l'une quelconque des revendications précédentes, dans lequel l'application de la correction de phase comprend l'application d'une correction de phase fixe (132) par laquelle le signal de phase est corrigé par une valeur fixe et/ou l'application d'une correction de phase dynamique (131) par laquelle le signal de phase est corrigé par une valeur variable qui est autorisée à changer pendant le fonctionnement.

**5.** Procédé selon l'une quelconque des revendications précédentes, dans lequel l'application de la correction de phase comprend une ou une combinaison des étapes consistant à :

- appliquer une correction pour un retard introduit par l'acquisition du signal de surveillance (91) par acquisition de données numériques ;
- appliquer une correction pour un retard introduit par l'exécution de code par une unité de traitement dérivant le signal de commande de synchronisation ;
- appliquer une correction pour un retard introduit par le filtrage de la tension surveillée ou du signal de surveillance (91) ;
- appliquer une correction pour un déphasage introduit par une connexion électrique entre une position à laquelle la tension est surveillée et un emplacement du transformateur (20) ;
- appliquer une correction pour un déphasage introduit par un circuit électrique dans un chemin électrique entre la position à laquelle la tension est surveillée et l'emplacement du transformateur (20) ;
- appliquer une correction pour un déphasage introduit par une configuration de connexions des enroulements primaire et secondaire du transformateur, ou
- appliquer une correction de phase dynamique pour un déphasage introduit par le transformateur (20).

**6.** Procédé selon l'une quelconque des revendications précédentes, dans lequel le transformateur (20) est un transformateur triphasé comprenant des enroulements de transformateur pour trois phases électriques, et dans lequel le changeur de prises en charge comprend des prises de transformateur (25-27) pour chacune des trois phases électriques du transformateur (20), dans lequel le signal de phase (94) est estimé individuellement pour chacune des trois phases électriques et/ou dans lequel la correction de phase est appliquée individuellement pour chacune des trois phases électriques et/ou dans lequel le signal de commande de synchronisation (80) est dérivé individuellement pour chacune des trois phases électriques.

**7.** Procédé selon l'une quelconque des revendications précédentes, dans lequel l'estimation de la phase de la tension surveillée pour obtenir le signal de phase (94) comprend l'utilisation d'un détecteur de passage à zéro (122) pour détecter au moins un passage à zéro (93) du signal de surveillance (91).

**8.** Procédé selon la revendication 7, dans lequel la détection de l'au moins un passage à zéro du signal de surveillance (91) par le détecteur de passage à zéro (122) comprend l'utilisation d'au moins un premier seuil de tension au-dessus d'une valeur de tension nulle et d'un second seuil de tension en dessous d'une valeur de tension nulle et la détermination de la présence d'un passage à zéro si le signal de surveillance (91) a une valeur comprise entre le premier seuil de tension et le second seuil de tension.

**9.** Procédé selon l'une quelconque des revendications précédentes, dans lequel l'estimation de la phase de la tension surveillée pour obtenir le signal de phase comprend l'utilisation d'une boucle à verrouillage de phase, PLL, (121) pour détecter une fréquence (92) de la tension surveillée.

**10.** Procédé selon la revendication 9 et selon la revendication 7 ou 8, dans lequel le signal de phase (94) est généré par un intégrateur (123) qui utilise le passage à zéro détecté (93) du signal de surveillance et la fréquence détectée (92) de la tension surveillée comme entrées.

**11.** Procédé selon l'une quelconque des revendications précédentes, dans lequel la dérivation du signal de commande de synchronisation (80) à partir du signal intermédiaire (95) comprend :

- la détection, dans ledit signal intermédiaire (95), de l'occurrence d'au moins une valeur de phase prédéterminée ; et

- la génération du signal de commande de synchronisation (80) sur la base de la détection d'au moins une valeur de phase prédéterminée en générant un changement de signal dans le signal de commande de synchronisation (80) à l'instant auquel la valeur de phase prédéterminée est détectée.

12. Procédé selon l'une quelconque des revendications précédentes, dans lequel le procédé comprend en outre l'application d'un décalage de phase prédéterminé au signal de phase (94, 95) avant la dérivation du signal de commande de synchronisation (80).

13. Procédé de commande d'un changeur de prises en charge (30) d'un transformateur (20) pour effectuer un changement de prise d'une première prise de transformateur (26) à une seconde prise de transformateur (25), dans lequel le procédé comprend :

- la détermination d'un signal de commande de synchronisation (80) selon le procédé de l'une quelconque des revendications 1 à 12 ;
- la détection d'un événement déclencheur pour déclencher le changement de prise ;
- lors de la détection de l'événement déclencheur, la dérivation, sur la base du signal de commande de synchronisation (80), d'un signal de commande (81) pour commuter un élément de commutation (31) couplé à la seconde prise de transformateur (25) ; et
- l'application du signal de commande (81) à l'élément de commutation (31) de la seconde prise de transformateur (25) pour effectuer le changement de prise.

14. Système de commande configuré pour commander le changement d'une prise de transformateur d'un transformateur, dans lequel le transformateur (20) comprend un changeur de prises en charge (30) comprenant plusieurs prises de transformateur respectives (25-27), dans lequel le système de commande (10) est configuré pour réaliser le procédé selon l'une quelconque des revendications précédentes.

15. Programme informatique pour générer un signal de commande de synchronisation pour commander la synchronisation d'un changement d'une prise de transformateur (25-27) d'un transformateur (20), dans lequel le programme informatique comprend des instructions de commande qui, lorsqu'elles sont exécutées par une unité de traitement (61) d'un système de commande (10) qui commande un changeur de prise en charge (30) du transformateur (20), amènent l'unité de traitement (61) à réaliser le procédé selon l'une quelconque des revendications 1 à 13.

# FIG 1

# FIG 2

# FIG 3

# FIG 4

## FIG 5

## FIG 6

FIG 7

FIG 8

## FIG 9

## FIG 10

FIG 11

94, 95

FIG 12

80

FIG 13

FIG 14

FIG 15

$R = R_1 + R_2$
$X_\sigma = X_{\sigma 1} + X_{\sigma 2}$
$I \approx I_1 \approx I_2$
$\Delta U = I \cdot (R + jX_\sigma)$
$U_1 = U_2 - \Delta U$

# FIG 16

S10 — Monitor voltage on primary and/or secondary side of transformer to obtain monitoring signal

S11 — Detect voltage frequency from monitoring signal using PLL

S12 — Generate zero crossing signal from monitoring signal for each electrical phase by detecting voltage zero crossings in monitoring signal

S13 — Generate phase signal for each electrical phase by integrating detected frequency and resetting phase signal at each second detected zero crossing

S14 — Apply phase correction to phase signal

S15 — Apply phase offset to phase signal

S16 — Generate timing control signal by detecting predetermined phase value in corrected/offset phase signal for each electrical phase and by including a signal change (e.g. a pulse) in timing control signal when predetermined phase value is detected

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020239425 A1
- US 10727755 B2
- US 3551789 A
- CN 112735790 A

**Non-patent literature cited in the description**

- Solid-state on-load transformer tap changer. *IEE Proc.: Electric Power Applications*, November 1996, vol. 143 (6)
- **FAIZ J. et al.** New Controller for an Electronic Tap Changer.... *IEEE Transactions on Power Delivery*, 01 January 2007, vol. 22
- **ECHAVARRIA et al.** Analysis, Design, and Implementation of a Fast On-Load Tap Changing Regulator. *IEEE Transactions on Power Electronics*, March 2007, vol. 22 (2)